# EUROPÄISCHE PATENTANMELDUNG

(11) **EP 0 848 474 A1**
(43) Veröffentlichungstag der Anmeldung: **17.06.1998**
(21) Anmeldenummer: 97119005.3
(22) Anmeldetag: 31.10.1997
(51) Int. Cl.: H02K 1/02, H02K 5/24

(54) **Rotor für Elektrokleinmotoren**

(30) Priorität: 16.12.1996 DE 19652263
(71) Anmelder: ROBERT BOSCH GMBH, 70442 Stuttgart (DE)
(72) Erfinder: Agnon, Reuben, Dr.-Ing., 77880 Sasbach (DE); Wehberg, Josef, Dr.-Ing., 30459 Hannover (DE); Knoepfel, Gerd, Dipl.-Ing. (FH), 77815 Bühl (DE); Doll, Theo, 77815 Bühl/Kappelwindeck (DE)

(57) **Zusammenfassung**

Bei einem Rotor für Elektrokleinmotoren in Außenläuferbauart, insbesondere für bürstenlose Gleichstrommotoren, mit einem drehfest auf einer Rotorwelle (15) sitzenden, Permanentmagneterregerpole (22) tragenden Polgehäuse (20) ist zur Reduzierung des vom Rotor durch Körperschall erzeugten Laufgeräusches das Polgehäuse (20) aus einem dreischichtigen Verbundblech (23) hergestellt, bei dem eine Kunststoffschicht (26) zwischen zwei Deckblechen (24,25) aus Eisen oder Stahl angeordnet ist.

## Beschreibung

### Stand der Technik

Die Erfindung betrifft einen Rotor für Elektrokleinmotoren in Außenläuferbauart, insbesondere für bürstenlose Gleichstrommotoren, der im Oberbegriff des Anspruchs 1 definierten Gattung.

Bei einem bekannten, elektronisch kommutierten, bürstenlosen Gleichstrommotor für niedrige Drehzahlen dieser Art (EP 0 501 521 A1), der insbesondere zum Antrieb von Einrichtungen dient, die nur eine geringe Last für den Motor darstellen, wie z.B. Drehteller, Rundumleuchten od.dgl. (EP 0 501 521A1), sind die Erregerpole des Rotors in einem ringförmigen Permanentmagneten ausgebildet, der über einen massiven, weichmagnetischen Eisenring mit dem Polgehäuse drehfest verbunden ist.

Motoren in Außenläuferbauweise mit aus massivem Eisen oder Stahl bestehendem Polgehäuse neigen konstruktionsbedingt zu einer erheblichen Geräuscherzeugung. Dies liegt darin begründet, daß der um die Wicklung des Stators drehende Rotor systembedingt durch verschiedene Kräfte und Momente beaufschlagt wird, die ihren Betrag und ihre Richtung in Abhängigkeit von der Winkellage des Rotors ändern. Hierdurch wird das Polgehäuse zu Schwingungen angeregt und durch die sich ausbildenden Körperschallwellen wird großflächig Luftschall abgestrahlt. Solche sich ändernde Kräfte und Momente entstehen in tangentialer Richtung des Rotors z.B. durch das Rasten des Rotors und in radialer Richtung z.B. durch auf die Magneterregerpole wirkende Kräfte. Insbesondere bei stufenlos geregelten Motoren wird das Polgehäuse bei Durchfahren des gesamten Betriebsbereichs häufig in einem oder mehreren Resonanzpunkten angeregt. Die konstruktionsbedingte, glockenähnliche Gestalt des Polgehäuses begünstigt dabei das Schwingungsverhalten.

### Vorteile der Erfindung

Der erfindungsgemäße Rotor mit den kennzeichnenden Merkmalen des Anspruchs 1 hat den Vorteil, daß das aus Verbundblech gefertigte Polgehäuse einen hohen Dämpfungskoeffizienten für Körperschallwellen besitzt. Im Vergleich zum massiven Stahlblech hat Verbundblech einen um einhundert größeren Verlustfaktor, der zu einer erheblichen Minderung des vom Polgehäuse abgestrahlten Körperschallpegels führt. Der Verlustfaktor ist dabei abhängig von der Temperatur, der Frequenz der Anregung, der Blechdicke, der Qualität der Kunststoffschicht und der geometrischen Gestalt des Polgehäuses und kann an die im Motor vorliegenden Verhältnisse problemlos angepaßt werden. Beispiele für Verbundbleche, aus denen das Polgehäuse des erfindungsgemäßen Rotors gefertigt werden kann, sind die unter den Marken "Bondal" oder "Tritec" von den Firmen Hoesch Stahl AG bzw. Thyssen Stahl AG vertriebenen Sandwich- oder Verbundbleche.

Der erfindungsgemäße Rotor zeichnet sich durch eine geringe Luftschallabstrahlung und eine kostengünstige Konstruktion aus, da zur Erfüllung geräuschreduzierter Funktionen kein weiteres Bauteil mehr erforderlich ist.

Durch die in den weiteren Ansprüchen aufgeführten Maßnahmen sind vorteilhafte Weiterbildungen und Verbesserungen des im Anspruch 1 angegebenen Rotors möglich.

Gemäß einer bevorzugten Ausführungsform der Erfindung sind die Deckbleche aus schmelztauchveredeltem Stahlblech, das z.B. unter dem Handelsnamen "Galfan" im Markt ist, hergestellt. Solche Bleche besitzen sehr gute Tiefzieh- und Korrosionseigenschaften.

Gemäß einer vorteilhaften Ausführungsform der Erfindung weisen dabei beide Deckbleche die gleiche Blechdicke auf. Aus tiefziehtechnischen Gründen oder aus Gründen der Erhöhung der Festigkeit kann aber auch ein unsymmetrischer Aufbau des Verbundbleches mit in zwei unterschiedlichen Stärken ausgeführten Deckblechen in Betracht gezogen werden.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines bürstenlosen Kleinmotors gemäß Linie I-I in Fig. 2,
- Fig. 2: einen Querschnitt des Kleinmotors gemäß Linie II-II in Fig. 1.

### Beschreibung des Ausführungsbeispiels

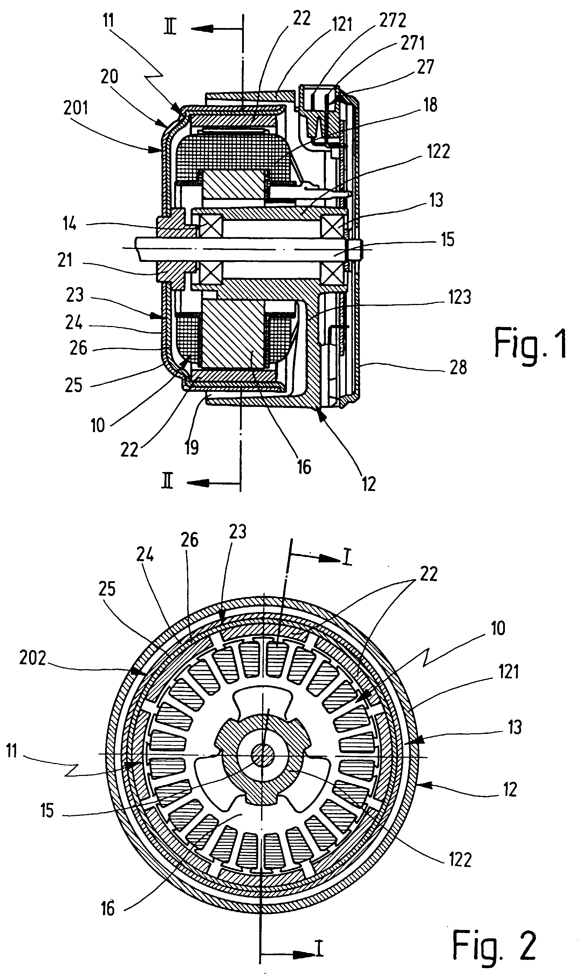

Der in Fig. 1 und 2 im Längs- und Querschnitt dargestellte bürstenlose, elektrisch kommutierte Gleichstrommotor ist in sog. Außenläuferbauweise konstruiert und weist einen innenliegenden Stator 10 und einen den Stator 10 außen übergreifenden Rotor 11 auf. Der Stator 10 ist in einem Motorgehäuse 12 befestigt, das einen innenliegenden Hohlzylinder 121 und einen dazu konzentrisch den Hohlzylinder 121 mit Abstand umgebenden Außenring 122 aufweist. Hohlzylinder 121 und Außenring 122 sind an der Stirnseite des Motorgehäuses 12 über radiale Stege 123 einstückig miteinander verbunden. In Innern des Hohlzylinders 121 sind zwei im Längsabstand voneinander angeordnete Drehlager 13,14 befestigt, die eine Rotorwelle 15 drehbar aufnehmen. Außen ist auf dem Hohlzylinder 121 ein Eisenblechpaket 16 des Stators 10 aufgeschoben und befestigt. Das Eisenblechpaket 16 trägt in bekannter Weise eine Vielzahl von längs seines Umfangs im gleichen Abstand voneinander angeordneten axialen Nuten 17, in denen eine Statorwicklung 18 eingelegt ist. Zwischen dem Außenumfang des Eisenblechpakets 16 und der Innwand des Außenrings 122 des Motorgehäuses 12 verbleibt ein größerer Ringraum 19, in welchem der Rotor 11 umläuft.

Der Rotor 11 weist ein topfförmiges Polgehäuse 20 auf, dessen Topfboden 201 koaxial auf einer aus Sintermetall hergestellten Buchse 21 sitzt und auf dieser verstemmt ist. Die Buchse 21 sitzt drehfest auf der Rotorwelle 15, was beispielsweise mit einer Preßverbindung erreicht werden kann. Wie insbesondere aus Fig. 2 ersichtlich ist, sind an der Innenwand des zylinderförmigen Topfmantels 202 eine Mehrzahl von Magnetpolen in Form von Permanentmagnetsegmenten 22 angeordnet. Die Magnetsegmente 22 sind dabei entweder an der Innenwand des Polgehäuses 20 angeklebt oder an dieser durch hier nicht dargestellte Klammern gehalten.

Das Polgehäuse 20 ist als Tiefziehteil aus einem dreischichtigen Verbundblech 23 ausgeführt, bei dem zwischen zwei Deckblechen 24,25 eine Kunststoffschicht 26 angeordnet ist. Zur Erzielung günstiger Tiefzieh- und Korrosionseigenschaften werden die Deckbleche 24,25 aus schmelztauchveredeltem Stahlblech ausgeführt, wie es z.B. im Handel unter der Bezeichnung "Galfan" erhältlich ist. In dem Ausführungsbeispiel der Fig. 1 ist das Verbundblech 23 mit gleich starken Deckblechen 24,25 ausgeführt. Aus tiefziehtechnischen Gründen oder zur Erhöhung der Festigkeit kann jedoch die Dicke der Deckbleche 24,25 auch unterschiedlich gewählt werden. Dreilage Verbundbleche, auch Sandwichbleche genannt, sind bekannt und werden z.B. von der Firma Thyssen Stahl AG unter dem Markennamen "Tritec" und von der Firma Hoesch Stahl AG unter der Marke "Bondal" angeboten.

Zur Ergänzung des Aufbaus des Kleinmotors ist in Fig. 1 noch der elektrische Anschlußstecker 27 für die Statorwicklung 18 dargestellt, auf dessen zwei Steckerkontakte 271,272 der Anschlußstecker eines entsprechenden elektrischen Anschlußkabels aufgeschoben werden muß. Der im Ausführungsbeispiel dargestellte bürstenlose Kleinmotor in Außenläuferbauweise ist achtpolig ausgeführt und weist daher entsprechend acht Permanentmagnetsegmente 22 in seinem Rotor 11 auf. Die vom Polgehäuse 20 abgekehrte Stirnseite des Motorgehäuses 12 ist mit einem Deckel 28 abgeschlossen.

## Patentansprüche

1. Rotor für Elektrokleinmotoren in Außenläuferbauart, insbesondere für bürstenlose Gleichstrommotoren, mit einer Rotorwelle (15), mit einem auf der Rotorwelle (15) drehfest sitzenden, topfförmigen Polgehäuse (20) und mit an der zylinderförmigen Innenwand (20) des Polgehäuses(20) gehaltenen Erregerpolen (22) aus permanentmagnetischem Material, dadurch gekennzeichnet, daß das Polgehäuse (20) aus einem dreischichtigen Verbundblech (23) besteht, bei dem eine Kunststoffschicht (26) zwischen zwei Deckblechen (24,25) aus Eisen oder Stahl angeordnet ist.

2. Rotor nach Anspruch 1, dadurch gekennzeichnet, daß die beiden Deckbleche (24,25) eine gleiche Blechdicke aufweisen.

3. Rotor nach Anspruch 1 oder 2, dadurch gekennzeichnet, daß die Deckbleche (24,25) aus schmelztauchveredeltem Stahlblech hergestellt sind.

4. Rotor nach einem der Ansprüche 1 - 3, dadurch gekennzeichnet, daß die Erregerpole aus kreisbogenförmigen Segmentabschnitten (22) bestehen, die an der Innenwand des Polgehäuses (20) angeklebt oder durch Klammern gehalten sind.

5. Rotor nach einem der Ansprüche 1 - 4, dadurch gekennzeichnet, daß das Polgehäuse (20) auf einer auf der Rotorwelle (15) drehfest sitzenden Buchse (21) verstemmt ist.

6. Rotor nach Anspruch 5, dadurch gekennzeichnet, daß die Buchse (21) als Sinterteil gefertigt und auf die Rotorwelle (15) aufgepreßt ist.
